# EUROPEAN PATENT SPECIFICATION

(11) **EP 2 529 630 B1**
(45) Date of publication and mention of the grant of the patent: **25.05.2016**
(21) Application number: 12174198.7
(22) Date of filing: 18.12.2007
(51) Int. Cl.: A23F 5/40, A23F 5/46, A23L 2/56, A23L 2/66

(54) **Method for preparing beverage compositions having improved aroma release characteristics and compositions for use therein**
Verfahren zur Herstellung von Getränkezusammensetzungen mit verbesserten Aromafreisetzungseigenschaften und Zusammensetzungen zur Verwendung darin
Procédé de préparation de compositions de boissons possédant des caractéristiques de libération d'arôme améliorées et compositions à cet usage

(30) Priority: 29.12.2006 US 882743 P; 13.12.2007 US 955778
(43) Date of publication of application: 05.12.2012
(62) Divisional of application: 07869434.6
(73) Proprietor: Intercontinental Great Brands LLC, East Hanover, NJ 07936 (US)
(72) Inventor: Zeller, Bary Lyn, Glenview, IL 60025 (US); Ludwig, Cathy Jean, Grayslake, IL 60030 (US); Preininger, Martin, Evanston, IL 60202 (US); Oxford, Philip James, Chipping Norton, Oxfordshire OX7 5LF (GB); Rehn, Nadine, 80799 München (DE); Massey, Aybe Tulay, Northampton, Northamptonshire NN4 8RZ (GB); Windsor, Nicole Lee, Glenview Illinois 60025 (US); Gaonkar, Anilkumar Ganapati, Buffalo Grove, IL 60089 (US)
(74) Representative: Smaggasgale, Gillian Helen

(56) References cited:
- EP-A- 1 129 624
- WO-A-02/49450
- WO-A-96/05737
- WO-A-03/099030
- WO-A-2004/071203
- US-A- 5 399 368
- US-A1- 2004 202 767

## Description

### FIELD OF THE INVENTION

The present invention is directed to methods for preparing beverage compositions having improved aroma release characteristics and compositions for use therein.

### BACKGROUND OF THE INVENTION

In the manufacture of many instant food and beverage products, such as instant coffee, tea, soups, desserts, toppings and the like, the components are subjected to processing conditions, such as elevated temperature, which results in the loss or deterioration of volatile compounds which contribute to the desirable aroma and/or flavor of the product which is reconstituted by the consumer. To compensate for such loss during processing, natural and synthetic aromas and flavors are typically added to the composition in an attempt to provide the reconstituted product with the desired aroma and/or flavor. However, such natural and synthetic aromas and flavors generally are highly volatile and extremely sensitive to oxidation by atmospheric oxygen and to moisture. As a result, many of these substances, after incorporation in the food or beverage, lose much of their original aroma and flavor and fail to provide the consumer product with the desired characteristics. Moreover, when high levels of aromatizing ingredients are incorporated into a mix in an attempt to produce a beverage having a desirably strong preparation aroma, they tend to produce undesirably strong beverage residual flavors.

A particular problem in connection with instant coffee beverages is the relative lack of aroma burst or "above-cup aroma" generated at the time that the hot instant coffee beverage is prepared compared to the coffee aroma that is generated when brewing roasted and ground coffee. U.S. Patent No. 5,399,368 and U.S. Patent No. 5,750,178 describe a number of known techniques to provide an initial burst of above-cup coffee aroma, including coating soluble coffee powder with an aqueous emulsion of an aromatic coffee substance and employing particulate aromatized coffee glass. These patents additionally describe methods for making capsule particles containing an aromatized coffee oil core. With such methods of incorporating aromatized coffee oil-containing particles into an instant coffee product, the amount of above-cup aroma which can be achieved depends, in large part, on the amount of such particles employed. The use of coffee oils in instant coffee does not normally pose a problem at the low levels needed to provide only a package aroma. However, a relatively large amount of particles must be employed to produce good preparation aroma. This approach may lead to a product having an overwhelmingly strong taste or aroma during consumption. Moreover, the more capsules that are employed, the more capsule material, particularly coffee oil, that is introduced. The added coffee oil may accumulate as an oil film on the surface of the coffee beverage. Such oil films are very apparent and are widely known to impair consumer acceptance of instant coffee.

An additional problem exists in connection with instant cappuccino-type beverages and other beverages having a foamed upper surface, since the foam is widely believed to impair aroma release from the beverage into the headspace above the beverage by creating a physical barrier between the beverage and headspace that may reduce the amount of aroma released into the headspace and/or reduce the rate at which aroma is released into the headspace. With the increasing popularity in the food and beverage industry of cappuccino and other foamed beverages, numerous instant cappuccino beverages and the like have appeared in the marketplace. With these instant cappuccino-type beverages, it is desirable to provide a beverage having an authentic "coffee house" appearance including a foamed surface layer that is desirably two-toned (i.e., having portions that are white or light-colored while other portions are darker in color). A number of techniques are known for preparing such a foamed beverage, including for example using an instant dry mix composition for producing a beverage having a two-toned foam on its surface comprising a foaming creamer and a mixture of a fast dissolving or fast dispersing flavor/color component and an optional sweetener component, the density of which is at least 1.9 times higher than the density of the foam layer. To prepare a hot beverage from the dry mix composition, the foaming creamer is dissolved in a hot liquid such as water or milk to prepare the foam layer. The combined sweetener and flavor/color components are then added. While the majority of the sweetener and flavor/color components disperses to form a drinkable beverage, a small amount remains in the foam layer to create the two-toned effect.

WO2002/049450 describes a particulate food preparation aroma composition and dehydrated food or beverage composition including the particulate preparation aroma composition. The particulate composition includes a food aromatising composition which comprises a volatile characterising food aroma constituent other than a natural essential oil and a volatile organic carrier which is in the liquid state at 25 °C and atmospheric pressure and has a vapour pressure of at least 0.01 mm Hg at 25 °C, a boiling point in the range of 25 to 250 °C, a density of less than 1.0 g/cc at 25 °C, and water solubility of not more than about 10 % at 25 °C.

While it is often desirable to provide a thick, two-toned foam layer, studies have revealed that increasing the amount of fatted foaming creamer in such a cappuccino mix to increase the thickness of the foam layer undesirably decreases consumer-perceived above-cup aroma intensity of the beverage. Thus, there remains a need for a method of preparing beverages, including, for example, a cappuccino-type beverage having a desirable foamed surface layer, that provides improved aroma release characteristics including enhanced above-cup aroma and reduced beverage residual flavors. The present invention may be used to fulfill these needs, as well as other needs and benefits, as will be apparent from the following description of embodiments of the present invention.

### SUMMARY OF THE INVENTION

The present invention provides a method for preparing beverage compositions having improved aroma release characteristics and compositions for use therein. According to one aspect of the invention, a method is provided for preparing a composition for preparing a beverage having enhanced aroma release and reduced residual flavor. The method comprises providing an aroma source comprising a fat-soluble, volatile flavor ingredient, wherein the aroma source contains less than 2.0g of fat per serving;
providing a fat-containing ingredient configured to have a delayed dispersibility in a liquid, wherein configuring the fat containing ingredient to have a delayed dispersibility in a liquid comprises one of:
at least one of coating, aggregating, granulating, encapsulating, compacting, tableting, extruding, denaturing, and hardening the fat-containing ingredient to contain a fat having a melting point about 50°C; or at least one of complexing, sequestering, sorbing, chelating, and encapsulating the fat in a particulate material comprising at least one of amylose, cyclodextrin, a molecular sieve, a porous sorbent, a non-porous sorbent, a protein, a gum, a polymer, and mixtures thereof; and wherein the fat-containing ingredient having a delayed dispersibility in a liquid does not completely disperse, nor completely dissolve, nor completely disintegrate in water at a temperature above ambient room temperature for at least 10 seconds, to inhibit the dissolution of the fat-soluble, volatile flavour ingredient in the fat-containing ingredient when the beverage is prepared and to thereby promote the release of the fat-soluble, volatile flavour ingredient into a headspace above the beverage when the beverage is prepared to provide enhanced aroma release with reduced residual flavor in the beverage due to the fat-soluble, volatile flavour ingredient.

### BRIEF DESCRIPTION OF THE DRAWINGS

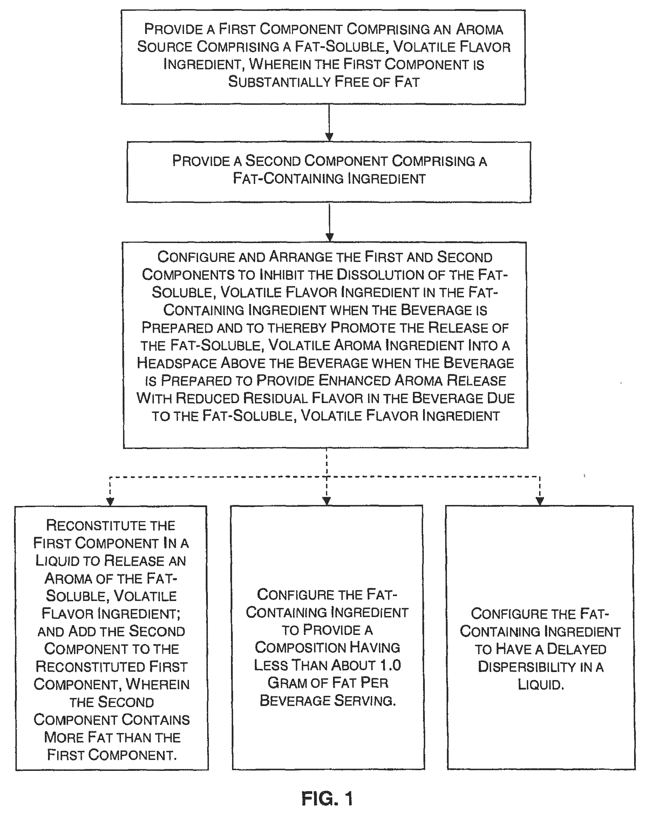

FIG. 1 comprises a flow diagram view configured according to various aspects of the invention.

### DETAILED DESCRIPTION

By causing a greater portion of volatile flavor substances to be released into the headspace above a reconstituted instant beverage and a lesser portion to remain in the beverage itself, a beverage can be prepared having enhanced above-cup aroma release and reduced beverage residual flavors. The present invention provides a method for preparing such beverage compositions. Contrary to the conventional belief of those in the art (i.e., that increased foam thickness impairs aroma release by creating an increased physical barrier to release of odor-active volatile chemical components from the beverage to the headspace), we have recently discovered that by replacing a fatted foaming creamer with a fat-free or low-fat foaming ingredient, a surprising increase in aroma release can be obtained, even when the foam thickness is greatly increased. Although not wishing to be limited by theory, it is believed that partitioning of flavor substances into the dispersed fat phase of a reconstituted beverage mix detrimentally impairs aroma release and increases beverage residual flavor. Also surprising, was the discovery that incorporation of gasified, gas-injected, pressurized-gas, or gas-producing fat-free or low-fat foaming ingredients into non-foaming beverage mixes can actually increase aroma release in such beverages even when such incorporation produces a foam layer. Again, not wishing to be limited by theory, it is believed that the gas acts to sparge flavor substances from the liquid phase of the beverage both during and after reconstitution, beneficially resulting in a greater portion of the volatile flavor substances to be released into the headspace above the beverage.

Thus, referring to FIG. 1, a method is disclosed for preparing a beverage composition having enhanced aroma release and reduced residual flavor comprising providing a first component comprising an aroma source comprising a fat-soluble, volatile flavor ingredient, wherein the first component is substantially free of fat; providing a second component comprising a fat-containing ingredient; and configuring and arranging the first and second components to inhibit the dissolution of the fat-soluble, volatile flavor ingredient in the fat-containing ingredient when the beverage is prepared and to thereby promote the release of the fat-soluble, volatile flavor ingredient into a headspace above the beverage when the beverage is prepared to provide enhanced aroma release with reduced residual flavor in the beverage due to the fat-soluble, volatile flavor ingredient.

Also disclosed is, a composition for
preparing a beverage having enhanced aroma release and reduced residual flavor comprising a first component comprising an aroma source comprising a fat-soluble, volatile flavor ingredient, wherein the first component is substantially free of fat; and a second component comprising a fat-containing ingredient; wherein the first and second components are configured and arranged to inhibit the dissolution of the fat-soluble, volatile flavor ingredient in the fat-containing ingredient when the beverage is prepared and to thereby promote the release of the fat-soluble, volatile flavor ingredient into a headspace above the beverage when the beverage is prepared to provide enhanced aroma release with reduced residual flavor in the beverage due to the fat-soluble, volatile flavor ingredient.

The first component preferably contains most, and more preferably contains all, of at least one aroma source comprising at least one fat-soluble, volatile flavor ingredient. As used herein, "fat-soluble, volatile flavor ingredient" refers to any volatile liquid or solid component of a flavor and/or aroma ingredient capable of partitioning, dissolving, or dispersing, in part or in whole, into a fat as defined herein. The fat-soluble, volatile flavor ingredient, which may be natural or synthetic in origin, is preferably comprised of at least one fat-soluble or fat-miscible odor-active volatile chemical component that is predominantly liquid or solid at 25 ºC and atmospheric pressure in its pure form. It preferably has a boiling point below 300 ºC, more preferably below 200 ºC, and most preferably below 150 ºC. As used herein, "boiling point" refers to the temperature at which the odor-active volatile chemical component vaporizes or thermally decomposes at atmospheric pressure. As used herein, "odor-active" refers to any volatile liquid or solid component of a flavor and/or aroma ingredient capable of being perceived through the sense of smell. Suitable fat-soluble, volatile flavor ingredients may include, but are not limited to, vanillin, camphene, benzyl benzoate, cinnamaldehyde, ethyl decanoate, 2-methoxy-4-vinylphenol, decanal, 2-heptylfuran, nonyl acetate, ethyl octanoate, beta-damascenone, linalool, 1-octanol, heptyl acetate, 2-ethyl-3,5-dimethyl pyrazine, benzaldehyde, d-limonene, ethyl hexanoate, myrcene, heptanal, 2-heptanone, methyl pentanoate, 2-ethylfuran, 2,3-butanedione, and/or mixtures thereof.

The volatile chemical component is preferably encapsulated to facilitate handling and improve storage stability of the aroma source. Any suitable method effective to fix a volatile liquid or solid in or on a solid substrate may be used, including, but not limited to, spray drying, extrusion, sorption, desiccation, inclusion, co-crystallization, complexation, plating, coating, and/or coacervation. As described above, there is disclosed a method whereby a greater portion of volatile flavor substances is released into the headspace above a reconstituted instant beverage. Further, it may also beneficially improve the qualitative balance of both aroma and flavor when the aroma source is comprised of multiple volatile substances.

The fat-soluble, volatile flavor ingredient may optionally include one or more suitable volatile organic carriers, including, but not limited to, the volatile organic carriers described in U.S. Patent No. 6,544,576, U.S. Patent No. 6,772,905, and U.S. Patent No. 6,699,518.

Examples of such volatile organic carriers include, for example, d-limonene, 2-ethylfuran, ethyl acetate, and the like.

The first component is preferably substantially free of fat. As used herein, "substantially free of fat" and/or "substantially fat-free" refer to an ingredient, component, or dry-mix composition containing less than about 2.0 g of fat, preferably less than about 1.0 g of fat, and more preferably less than about 0.5 g of fat per serving. As used herein, a serving refers to about 10-50 g beverage mix and/or about 170-227 g (6-8 oz) reconstituted beverage. In one form, the first component is preferably fat-free (having less than 0.1 g fat per serving) or low-fat (having less than about 7 g fat per serving). As used herein, "low-fat" and/or "reduced-fat" are used to indicate that measures have been taken to reduce or limit the amount of fat typically present in a specific ingredient, component, or dry-mix composition. Conversely, "full-fat" is used herein to describe a corresponding reference ingredient, component, or dry-mix composition to which no measures have been taken to reduce or limit the amount of fat typically present.

In one form, the second component comprises a fat-containing ingredient. As used herein, "fat-containing ingredient" refers to any suitable edible water-soluble or water-dispersible particulate food ingredient capable of imparting or increasing desirable creaminess, mouthfeel, whiteness, and/or opacity to the reconstituted beverage. Preferably, the fat-containing ingredient comprises one or more fats dispersed in a matrix comprising one or more protein or carbohydrate ingredient or mixtures thereof. The fat may be caloric, non-caloric, or mixtures thereof, and may include any edible natural, synthetic, or modified non-volatile lipophilic substance, including solid fat, liquid oil, fat substitute, low HLB emulsifier, or other water-immiscible substance, obtained or derived from any suitable plant, animal, or other source. It may be present in pure form, as part of a flavor system in the form of a non-volatile carrier liquid, or as a dispersion of emulsified or encapsulated liquid droplets, solid particles, or mixtures thereof, such as commonly occurs in spray-dried creamer and shortening powders and in encapsulated flavors. Preferably the fat comprises triglycerides, diglycerides, or mixtures thereof, obtained or derived from plant or animal sources including, but not limited to, fruits, vegetables, legumes, seeds, nuts, grains, and milks. Suitable fat-containing ingredients include, for example, creamers, shortening powders, whitening compositions and mixtures thereof.

In one form, fat present in the second component is preferably dispersed into small droplets, such as can be obtained by homogenizing, and encapsulated in a suitable carrier, such as can be obtained by spray drying with a carbohydrate or protein, to form a foaming or non-foaming particulate creamer or shortening ingredient.

In another form, the second component preferably contains most, and more preferably contains all, of the fat-containing ingredient. Thus, the second component preferably contains more fat than the first component.

Optional additional components may be selectively apportioned in the first and/or second components to provide or enhance any desired organoleptic effects, nutritional fortification, shelf life, functionality, and so forth. Optional additional components include, but are not limited to, a foaming ingredient, a foam-stabilizing ingredient, a natural and/or artificial sweetener ingredient, a thickener ingredient, a flavor ingredient, a buffer ingredient, a color ingredient, a nutritional fortification ingredient (including, for example, mineral sources, prebiotics, probiotics, vitamins, phytonutrients, stimulants, digestion or metabolism enhancers, and/or essential fatty acids), an antioxidant ingredient, a preservative ingredient, a gum ingredient, a protein ingredient, a partially or fully denatured protein ingredient, a microparticulated protein ingredient, a microcrystalline cellulose ingredient, a tableting aid ingredient, a binder ingredient, a filler ingredient, and/or mixtures thereof.

In one form, one or more optional foaming ingredients may be selectively apportioned in the first component and/or second component of the composition. In a preferred form, all or most of the optional foaming ingredient is incorporated in the first component. The foaming ingredient may include any carbonation reagent, conventional foamer powder (such as gas-injected spray-dried milk or non-dairy creamer), pressurized-gas foamer powder (including any water-soluble or water-dispersible powder comprised of particles containing entrapped gas at a pressure greater than atmospheric pressure such as, but not limited to, the carbohydrate, protein, and soluble coffee pressurized-gas foamer powders described in U.S. Patent App. Pub. Nos. 2006/0040034, 2006/0040033, and 2006/0040038, and/or mixtures thereof). Preferably, the foaming ingredient is fat-free or substantially fat-free. More preferably the foaming ingredient is comprised of a mixture of gas-injected spray-dried skim milk foamer and fat-free pressurized-gas foamer.

In another form, an optional foam-stabilizing ingredient, such as a foam-stabilizing protein ingredient, is provided as an individual component of the composition or as an integral part of the foaming ingredient. The foam-stabilizing ingredient may include any soluble edible particulate protein capable of forming and/or stabilizing a beverage froth, including, for example, any native, fractionated, or modified protein and/or mixture of proteins obtained from any milk, soy, egg, gelatin, and/or other source. As used herein, "beverage froth", "foam", "foamed surface layer", "surface layer of foam", and "foam layer" have the same meaning. Preferred foam-stabilizing protein ingredients include spray-dried defatted milk powders, such as skim milk powder and sodium caseinate, and reduced-lactose milk powders such as milk or whey protein concentrates and isolates, fractionated milk proteins, and the like.

Incorporation of an optional foaming skim milk powder ("SMP") is particularly advantageous because it simultaneously serves as a foaming ingredient, a foam-stabilizing protein ingredient, and a non-fat coffee whitener. Suitable foaming SMP alternatives include, for example, pressurized-gas protein foamers or combinations of foaming carbohydrate powders, such as pressurized-gas or gas-injected spray-dried maltodextrins, and soluble protein ingredients, such as milk, soy, egg, or gelatin powders.

One or more optional coloring ingredients may also be selectively apportioned in the composition to control component, beverage, and/or froth colors. Coloring ingredients may include any suitable water-soluble or water-dispersible particulate coloring agent, including, for example, coffee, tea, fruit or vegetable extract, cocoa powder, natural or artificial food colors and dyes, and/or mixtures thereof. In a preferred form, all or most of the optional coloring ingredients are incorporated in the second component. For example, placing all or most of the soluble coffee in the second component of a cappuccino mix containing a foaming ingredient in the first component can be used to produce a desirable two-toned foam layer wherein portions are white or light-colored while other portions are brown or dark-colored.

Referring again to FIG.1, according to another disclosed approach, configuring and arranging the first and second components to inhibit the dissolution of the fat-soluble, volatile flavor ingredient in the fat-containing ingredient when the beverage is prepared and to thereby promote the release of the, fat-soluble, volatile flavor ingredient into a headspace above the beverage when the beverage is prepared to provide enhanced aroma release with reduced residual flavor in the beverage due to the fat-soluble, volatile, flavor ingredient comprises reconstituting the first component in a liquid to release the fat-soluble, volatile flavor ingredient; and adding the second component to the reconstituted first component; wherein the second component contains more fat than the first component. Reconstituting the first component in the absence of the second component beneficially provides significantly increased preparation aroma release while reducing undesirable beverage residual flavors as compared to reconstituting both components simultaneously.

In one form, a packaged beverage composition is provided, for preparing an instant beverage having an improved preparation aroma when reconstituted in a hot liquid. The packaged beverage composition comprises separate first and second components wherein the first component includes an aroma source and an optional fat-free or low-fat foaming ingredient, and the second component includes a fat-containing ingredient (such as a creamer, for example) and, thus, contains more fat than said first component. The first and second components may, for example, be separated into two separate packages or into separate compartments of the same package. The composition preferably includes a water-soluble or water-dispersible particulate coloring ingredient in the first and/or second components that is preferably comprised of a coffee, tea, fruit, or vegetable extract, or a cocoa powder.

In another form, a method is provided for preparing a coffee beverage in which a first component including a spray-dried coffee, cream, or other volatile flavor is reconstituted in hot water and a second component is subsequently added to the reconstituted first component. The second component preferably includes a spray-dried coffee creamer or other beverage whitener. In yet another form, a method is provided for preparing a cappuccino beverage in which a first component including a spray-dried coffee, cream, or other volatile flavor and further including a fat-free or low-fat foaming ingredient is reconstituted in hot water and a second component including a spray-dried coffee creamer or other beverage whitener is added to the reconstituted first component.

Again referring to FIG. 1, according to another approach disclosed, configuring and arranging the first and second components to inhibit the dissolution of the fat-soluble, volatile flavor ingredient in the fat-containing ingredient when the beverage is prepared and to thereby promote the release of the fat-soluble, volatile flavor ingredient into a headspace above the beverage when the beverage is prepared to provide enhanced aroma release with reduced residual flavor in the beverage due to the fat-soluble, volatile flavor ingredient comprises configuring the fat-containing ingredient to provide a composition having less than about 1.0 g of fat per beverage serving.

In one form, the fat-containing ingredient is a reduced-fat foaming whitener composition that, upon incorporation in a beverage composition, provides a composition having preferably less than about 1.0 g of fat, and more preferably, less than about 0.5 g of fat per beverage serving (about 10-50 g beverage mix and/or about 6-8 oz reconstituted beverage). Preferably, the whitener composition is substantially fat-free. As used herein, "whitener composition" refers to any water-soluble or water-dispersible composition that increases the whiteness and/or opacity of coffee or other beverages and includes creamer and shortening powders, milk powders, clouding agents, artificial colors, and mixtures thereof. So configured, the composition produces a beverage having a creaminess and appearance generally comparable or superior to full-fat whiteners (generally containing about 1-7 g of fat per serving) and providing an advantageously stronger beverage preparation aroma and reduced beverage residual flavor.

Preferably, the fat-containing ingredient and beverage composition are both free of non-fat polymeric fat replacers or fat substitutes, such as microcrystalline cellulose or microparticulate protein powders that are difficult to uniformly disperse in liquids such as by adding water and stirring with a spoon. Optionally, the fat-containing ingredient may be sugar-free and/or saturated/trans-fat-free.

According to another form, a composition is prepared containing preferably less than 1.0 g fat/serving, and more preferably less than 0.5 g fat/serving. The composition preferably comprises a dry-mix of an aroma source comprising a fat-soluble, volatile flavor ingredient, such as an encapsulated volatile flavor, a foaming ingredient, such as a carbonation reagent or spray-dried foamer, a foam-stabilizing protein ingredient, such as a milk powder, and an optional fat-containing ingredient, such as a particulate creamer.

In another form, a fat-free, instant cappuccino mix containing a fat-free or reduced-fat cappuccino whitener is prepared. The cappuccino mix comprises a spray-dried coffee, cream, or other volatile flavor and a gas-injected spray-dried skim milk foamer. In yet another form, a low-fat instant hot cappuccino mix is prepared containing a reduced-fat cappuccino whitener that further includes a foaming or non-foaming spray-dried fatted coffee creamer that provides a small amount of fat sufficient to enhance beverage appearance and flavor balance without greatly impairing aroma release. Other embodiments include optional addition of a pressurized-gas foamer, preferably fat-free, to the reduced-fat cappuccino whitener to further increase beverage froth and aroma release or replacement of the spray-dried fatted coffee creamer with a cold-soluble creamer and/or artificial color, such as a beverage cloud ingredient containing titanium dioxide, to facilitate dissolution in cold liquids. Cold-soluble creamers are typically either low-fat or contain predominantly saturated/trans-fat-free liquid oils in place of solid or hydrogenated fats predominantly used in conventional creamers. Optionally, conventional creamers may be agglomerated and/or coated with a wetting agent to provide cold-soluble creamers.

With reference once again to FIG. 1, according to the present invention, configuring and arranging the components to inhibit the dissolution of the fat-soluble, volatile flavor ingredient in the fat-containing ingredient when the beverage is prepared and to thereby promote the release of the fat-soluble, volatile, flavor ingredient into a headspace above the beverage when the beverage is prepared to provide enhanced aroma release with reduced residual flavor in the beverage due to the fat-soluble, volatile flavor ingredient comprises configuring the fat-containing ingredient to have a delayed dispersibility in a liquid. As used herein, "delayed dispersibility" and/or "delayed dispersion" refer to compositions that do not completely disperse, dissolve, or disintegrate in hot water or other liquid preferably for at least 10 seconds, more preferably for at least 20 seconds, and most preferably for at least 30 seconds after contact, and preferably when continuously stirred after contact. Preferably the ingredient will completely disperse, dissolve, or disintegrate in the hot water or other liquid within about 3 minutes, more preferably within about 2 minutes, and most preferably within about 1 minute. Such contact can be made either by adding hot water or other liquid to the compositions or by adding the compositions to hot water or other liquid. As used herein, "hot" water or other liquid refers to water or other liquid at a temperature above ambient room temperature, preferably above 40 ºC, more preferably above 50 ºC, and most preferably above 60 ºC.

In one form, the fat-containing ingredient is a fat-containing beverage whitener composition having a delayed dispersibility in liquid that, upon incorporation in a beverage composition, produces a beverage having beneficially stronger beverage preparation aroma and reduced beverage residual flavor than similarly-aromatized beverage compositions comprised of conventional creamers containing the same, or about the same, amount of fat. So configured, the delayed dispersion whitener composition may be combined with any instant or brewed coffee beverage to produce a whitened coffee beverage having improved aroma. The delayed dispersion whitener composition may range from full-fat to reduced-fat or substantially fat-free and can optionally be made sugar-free or saturated/trans-fat-free.

According to another form, a dry-mixed beverage composition is prepared comprising a delayed dispersion whitener composition and a fat-soluble, volatile flavor ingredient, such as an encapsulated volatile flavor. The composition optionally includes a foaming ingredient and a foam-stabilizing protein ingredient effective to produce a cappuccino-type beverage having a surface layer of foam.

According to another form, an instant coffee mix is prepared comprising a delayed dispersion whitener composition and an aroma source, such as a coffee, cream, or other volatile flavor. The delayed dispersion whitener composition preferably includes a physically-modified full-fat coffee creamer or shortening powder that disperses in water more slowly than the same creamer or shortening powder prior to modification. In yet another form, an instant cappuccino mix is prepared that includes a foaming ingredient and a foam-stabilizing protein ingredient in addition to a delayed dispersion whitener composition and an aroma source. In a further form, an instant cappuccino mix is prepared in which the physically-modified full-fat coffee creamer is replaced with a physically-modified reduced-fat coffee creamer. Such a mix may optionally include an artificial color such as a beverage cloud containing titanium dioxide. Optionally, the physically-modified full-fat coffee creamer may be replaced with a physically-modified cold-soluble creamer to enable dissolution in cold liquids.

The fat-containing ingredient in the delayed dispersion whitener composition may be any suitable particulate material containing a natural or synthetic fat, oil, fat-substitute, low-HLB emulsifier, or other water-immiscible substance such as a fatty acid or fatty alcohol, and/or mixtures thereof that provides slower dispersion in water than conventional coffee creamers. Preferably the fat-containing ingredient is a physically-modified full-fat creamer composition. Optionally, the fat-containing ingredient is a non-dairy creamer composition substantially free of milk fat.

Delayed dispersion can be achieved by any number of techniques (i.e., physical modifications). By one approach, conventional foaming or non-foaming creamer powders or shortening powders can be coated, aggregated, granulated, encapsulated, compacted, tableted, extruded, denatured, or hardened using any suitable method effective to delay dispersion in water. By another approach, the fat constituent, typically a predominantly solid fat, such as milk fat, palm fat, coconut fat, or hydrogenated soybean, canola, sunflower or other oil, having a melting point of about 30-50 ºC, in a conventional creamer or shortening powder can be replaced, in part or in whole, with a fat constituent, such as tristearin, having an unconventionally high melting point (i.e., above about 50 ºC) to delay dispersion. Another suitable approach is to create alternative fat-containing ingredients by encapsulating, complexing, sequestering, sorbing, or chelating the fat in a particulate material, including, but not limited to, amylose, cyclodextrin, a molecular sieve, a porous or non-porous sorbent, a protein, a gum, or a polymer obtained from any edible natural or synthetic, organic or inorganic, food or non-food source, and/or mixture thereof, effective to delay dispersion.

In yet another form, a fat-containing, delayed-dispersion whitener composition is prepared by (1) heating a powder selected from the group consisting of creamer powder and shortening powder to a temperature above a softening point of the powder or (2) heating a blend of the powder and a binding agent to a temperature above the softening point of the powder and/or binding agent, and (3) cooling the heated powder or the blend of the powder and binding agent to a temperature below the softening point of the powder and/or binding agent.

As used herein, "creamer powder" and "shortening powder" refer to any water-soluble or water-dispersible powder containing at least about 5%, preferably at least about 15%, and more preferably at least about 25%, by weight dispersed emulsified fat effective to increase the whiteness and/or opacity of a food or beverage prepared from a dry mix. As used herein, "softening point" refers to the temperature, such as the glass transition temperature of an amorphous solid or the melting point of a crystalline solid, at which the molecules present in the particles comprising a solid substance begin to acquire the mobility needed to allow the particles to become sticky or to be made to deform or flow, such as may be accomplished by continued heating and/or application of force, enabling individual particles to physically interact with others in their vicinity to form aggregates or granules. Suitable creamer powders and shortening powders include, for example, spray-dried fatted coffee creamer powders or shortening powders. Suitable binding agents include, for example, edible carbohydrate, protein, or other polymers, sugars, and sugar alcohols. Preferably, the binding agent is a sugar alcohol, and more preferably, lactitol or lactitol monohydrate. Other suitable sugar alcohols may include maltitol, sorbitol, mannitol, erythritol, xylitol, isomalt, hydrogenated starch hydrolysates, and hydrates thereof.

Alternatively, a fat-containing, delayed-dispersion whitener composition may be prepared by compacting a creamer powder or shortening powder, alone or in a dry-blend with a preferably non-fat tableting aid, and optionally comminuting and/or sieving the resulting aggregate.

The delayed-dispersion whitener composition may be produced using any suitable ratio of fat-containing ingredient, such as creamer or shortening powder, and binding agent or tableting aid, effective to combine the separate components into a single ingredient capable of providing delayed dispersion. Suitable ranges may include, for example, 1:10 to 10:1, more preferably 1:5 to 5:1, and most preferably 1:3 to 3:1. In general, increasing the ratio of binding agent or tableting aid to fat-containing ingredient increases the extent to which dispersion of the fat-containing ingredient is delayed.

According to yet another form, a granular beverage creamer composition is prepared having an apparent particle density preferably greater than about 0.8 g/cc, more preferably greater than about 0.9 g/cc, and most preferably greater than about 1.0 g/cc. As used herein, "apparent particle density" refers to the density of a particulate solid as measured using gas pycnometry to determine the volume of a given weight of powder or granules comprising the particulate solid. The volume includes any interior voids or pores closed to the surrounding atmosphere but excludes the exterior space between discrete particles. The granular beverage creamer composition preferably has a particle size with a smallest diameter preferably greater than about 0.3 mm, more preferably greater than about 0.4 mm, and most preferably greater than about 0.5 mm, with a largest particle diameter that is preferably less than about 15 mm, more preferably less than about 10 mm, and most preferably less than about 5 mm. The composition preferably takes longer than about 10 seconds, more preferably longer than about 20 seconds, and most preferably longer than about 30 seconds, to completely disperse in hot water or other liquid after contact, preferably with continuous stirring after contact. The composition will preferably completely disperse in hot water or other liquid within about 3 minutes, more preferably within about 2 minutes, most preferably within about 1 minute.

The method of the present invention may be used to prepare any number of instant food and/or beverage products. As used herein, beverage composition refers to compositions for preparing food and/or beverage products including, for example, a coffee mix, a latte mix, a cappuccino mix, a tea mix, a cocoa mix, a nutritional mix, a dessert mix, a topping mix, a soup mix and so forth.

### EXAMPLES

The following examples further illustrate various features of the invention, but are not intended to limit the scope of the invention as set forth in the appended claims. Unless otherwise noted, all percentages and ratios are by weight.
Examples 1-7 are information examples.

### EXAMPLE 1

The following examples demonstrate the benefits of the present invention in instant cappuccino mixes reconstituted with 150 mL of hot (88 ºC) water in a 250 mL beaker having a 65 mm internal diameter.

A first component, substantially free of fat, was formulated as follows:
(1) 5.5 g low-density spray-dried 1% fat (residual milk fat) SMP foaming ingredient (Diehl Foods; Defiance, OH) having a bulk density of 0.22 g/cc and a tap density of 0.31 g/cc;
(2) an aroma source (Artificial Coffee Flavor SD 7887-158; Kraft Foods; Glenview, IL) comprising 0.2 g 6% fat (triglyceride fractionated coconut oil used as a non-volatile carrier liquid) spray-dried artificial coffee flavor ("ACF") comprised of a compounded flavor mixture encapsulated in an amorphous particulate carbohydrate carrier to provide a powder containing about 4% flavor by weight, including many fat-soluble or fat-miscible odor-active volatile chemical components that are predominantly liquid or solid in their pure form at 25 ºC and atmospheric pressure with individual boiling points below 300 ºC, 200 ºC, or 150 ºC; and
(3) 0.25 g spray-dried soluble coffee ("SC") (SR1 Soluble Coffee Powder; Kraft Foods; Banbury, England).

A second component was formulated as follows:
(1) 1.75 g spray-dried SC;
(2) a fat-containing ingredient (Kievit; Netherlands) comprising 2.5 g high-density spray-dried 50% fat (hydrogenated coconut oil) non-foaming creamer having 0.46 g/cc bulk density and 0.54 g/cc tap density; and
(3) 4 g sugar.

Reconstitution of the first component (by adding hot water and stirring) produced a strong burst of coffee preparation aroma and a generally uniformly-colored off-white froth. Subsequent addition and stirring of the second component into the reconstituted first component produced a finished cappuccino beverage with low residual ACF flavor and desirable two-toned froth (about 9 mm in height) having distinct brown steaks and swirls throughout the off-white froth. By comparison, simultaneously reconstituting a mixture comprising the first and second components by adding the hot water and stirring produced a brown froth (about 10 mm in height) and finished cappuccino beverage with significantly weaker aroma and stronger residual flavor.

### EXAMPLE 2

A first component, substantially free of fat, was formulated as follows:
(1) 3 g fat-free pressurized-gas carbohydrate powder foaming ingredient prepared as generally described in Example 2 of U.S. Patent App. Pub. No. 2006/0040034 comprising, on a dry weight basis, about 8% sodium octenylsuccinate substituted starch and about 92% maltodextrin, and having an encapsulated pressurized nitrogen gas content of about 20 cc/g;
(2) 3 g spray-dried 1% fat SMP foaming ingredient of Example 1;
(3) an aroma source comprising 0.2 g 6% fat spray-dried ACF of Example 1; and
(4) 0.25 g spray-dried SC of Example 1.

A second component was formulated as follows:
(1) 1.75 g spray-dried SC of Example 1;
(2) 4 g sugar; and
(3) a fat-containing ingredient comprising 2.5 g spray-dried 50% fat non-foaming creamer of Example 1.

The first component was reconstituted by adding hot water and stirring, followed by subsequent addition and stirring of the second component into the reconstituted first component. Results similar to those observed in Example 1 were obtained with even greater preparation aroma intensity, lower residual flavor, and much greater froth height (about 27 mm). By comparison, simultaneously reconstituting a mixture comprising the first and second components by adding the hot water and stirring produced a brown froth (about 30 mm in height) and finished cappuccino beverage with significantly weaker aroma and stronger residual flavor.

### EXAMPLE 3

A first component, substantially free of fat, was formulated as follows:
(1) 5 g low-density spray-dried 10 DE maltodextrin powder (Grain Processing Corporation; Muscatine, IA) foaming ingredient having 0.12 g/cc bulk density and 0.15 g/cc tap density;
(2) 2 g spray-dried 1% fat SMP foaming ingredient of Example 1;
(3) an aroma source comprising 0.2 g 6% fat spray-dried ACF of Example 1; and
(4) 0.25g spray-dried SC of Example 1.

A second component was formulated as follows:
(1) 1.75 g spray-dried SC of Example 1;
(2) 4 g sugar; and
(3) a fat-containing ingredient comprising 2.5 g spray-dried 50% fat non-foaming creamer of Example 1.

Reconstitution of the first component (by adding hot water and stirring) produced a strong burst of coffee preparation aroma and a generally uniformly-colored off-white froth. Subsequent addition and stirring of the second component into the reconstituted first component produced a finished cappuccino beverage with low residual ACF flavor and desirable two-toned froth (about 10 mm in height) having distinct brown streaks and swirls throughout the off-white froth. By comparison, simultaneously reconstituting a mixture comprising the first and second components (by adding the hot water and stirring) produced a brown froth (about 10 mm in height) and finished cappuccino beverage with significantly weaker aroma and stronger residual flavor.

### EXAMPLE 4

A first component, substantially free of fat, was formulated as follows:
(1) 3 g fat-free pressurized-gas carbohydrate powder foaming ingredient of Example 2;
(2) 3 g low-density spray-dried 1% fat (residual milk fat) SMP foaming ingredient (Diehl Foods; Defiance, OH) having 0.24 g/cc bulk density and 0.33 g/cc tap density;
(3) an aroma source (IFF Cream Flavor; International Flavors & Fragrances Inc.; New York, NY) comprising 0.2 g 0.2% fat (triglyceride coconut palm kernel oil used as a non-volatile carrier liquid) spray-dried natural & artificial cream flavor ("N&ACF") comprised of a compounded flavor mixture including fat-soluble or fat-miscible odor-active volatile chemical components that are predominantly liquid or solid in their pure form at 25 ºC and atmospheric pressure with individual boiling points below 300 ºC, 200 ºC, or 150 ºC ;and
(4) 0.25 g spray-dried SC of Example 1.

A second component was formulated as follows:
(1) 1.75 g spray-dried SC of Example 1;
(2) 4 g sugar; and
(3) a fat-containing ingredient comprising 2.5 g spray-dried 50% fat non-foaming creamer of Example 1.

Reconstitution of the first component (by adding hot water and stirring) produced a strong burst of cream preparation aroma and a generally uniformly-colored off-white froth. Subsequent addition and stirring of the second component into the reconstituted first component produced a finished cappuccino beverage with low residual cream flavor and desirable two-toned froth (about 35 mm in height) having distinct brown steaks and swirls throughout the off-white froth. By comparison, simultaneously reconstituting a mixture comprising the first and second components by adding the hot water and stirring produced a brown froth (about 35 mm in height) and finished cappuccino beverage with significantly weaker aroma and stronger residual flavor.

### EXAMPLE 5

A cappuccino mix containing less than 1 g of fat was prepared as follows:

The first component was comprised of:
(1) 2 g spray-dried SC of Example 1;
(2) 4 g sugar; and
(3) an aroma source comprising 0.2 g 6% fat spray-dried ACF of Example 1; and
(4) 3 g fat-free pressurized-gas carbohydrate powder foaming ingredient of Example 2.

The second component was comprised of:
(1) a fat-containing ingredient comprising 4 g spray-dried 1% fat SMP foaming ingredient of Example 1.

The cappuccino mix was reconstituted (by blending first and second components, and adding hot water, and stirring) to produce a substantially fat-free cappuccino beverage with a strong coffee preparation aroma, a low residual ACF flavor, and good beverage creaminess and whitening with froth (about 35 mm in height). The second component contained about 0.04 g fat (about 1% by weight).

A reference mix comprised of the same ingredients with addition of 2.5 g spray-dried 50% fat non-foaming coffee creamer of Example 1 to the second component produced a somewhat more-whitened cappuccino beverage with a weaker aroma and a stronger residual flavor with froth (about 32 mm in height) The second component contained about 1.29 g fat (about 20% by weight).

### EXAMPLE 6

The cappuccino mix of Example 5 was prepared with 0.8 g spray-dried 50% fat non-foaming coffee creamer of Example 1 added to the second component. The mix was reconstituted (by blending first and second components, adding the hot water, and stirring) to produce a substantially fat-free beverage with a strong coffee preparation aroma and a low residual ACF flavor with froth (about 35 mm in height). Addition of this small amount of fatted creamer (about 0.4 g fat) to the second component improved overall beverage creaminess, flavor balance, and whitening. The resulting second component contained about 0.44 g fat (about 9% by weight). The resulting cappuccino mix contained less than 1 g of fat.

A reference mix comprised of the same ingredients with addition of 2.5 g spray-dried 50% fat non-foaming coffee creamer of Example 1 to the second component produced a more-whitened beverage having froth (about 32 mm in height) and substantially weaker aroma and stronger residual flavor when similarly reconstituted. The second component contained about 1.69 g fat (about 23% by weight).

### EXAMPLE 7

A cappuccino mix containing less than 1 g of fat was formulated as follows:

A first component was comprised of:
(1) 2 g spray-dried SC of Example 1;
(2) 4g sugar; and
(3) an aroma source comprising 0.2 g 0.2% fat spray-dried N&ACF of Example 4; and
(4) 3 g fat-free pressurized-gas carbohydrate powder foaming ingredient of Example 2.

The second component was comprised of:
(1) a fat-containing ingredient comprising 4 g spray-dried 1% fat SMP foaming ingredient of Example 4.

The mix was reconstituted (by blending first and second components, adding hot water, and stirring) to produce a substantially fat-free cappuccino beverage with a strong coffee preparation aroma, a low residual cream flavor, and good beverage creaminess and whitening with froth (about 39 mm in height). The second component contained about 0.04 g fat (about 1% by weight).

A reference mix comprised of the same ingredients with addition of 2.5 g spray-dried 50% fat non-foaming coffee creamer of Example 1 to the second component to provide a second component containing about 1.29 g fat (about 20% by weight). This produced a somewhat more-whitened cappuccino beverage with a weaker aroma and a stronger residual flavor with froth (about 37 mm in height) when similarly reconstituted.

Thus it was observed that, by using foaming SMP or suitable alternative to replace all or part of the fatted foaming creamers typically used to formulate conventional cappuccino creamers, reduced-fat instant beverages having stronger aroma than conventional full-fat products can be obtained. Use of foaming SMP is particularly advantageous because it serves as both a foaming ingredient and a foam-stabilizing protein ingredient.

### EXAMPLE 8

A cappuccino reference mix was formulated as follows:

A first component was comprised of:
(1) 2 g spray-dried SC of Example 1;
(2) 4 g sugar;
(3) 6 g spray-dried 1% fat SMP foaming ingredient of Example 1; and
(4) an aroma source comprising 0.2 g spray-dried ACF of Example 1.

A second component was comprised of:
(1) a fat-containing ingredient comprising 2.4 g spray-dried 50% fat non-foaming coffee creamer of Example 1.

The reference mix was reconstituted (by blending first and second components, adding hot water) to produce a cappuccino beverage having a weak preparation aroma, a strong residual ACF flavor, and good beverage creaminess and whitening with froth (about 12 mm in height). The mix completely dissolved within about 15 seconds after addition of water without stirring.

A delayed-dispersion creamer composition was prepared by spreading 10 g of the spray-dried 50% fat non-foaming coffee creamer of the reference mix in an 8-inch (20.3cm) baking pan and heating this amorphous creamer powder to above its softening point (approximately 50 ºC glass transition temperature) by placing the pan in an oven at 100 ºC for 30 minutes. After removing from heat and cooling to room temperature, the delayed-dispersion creamer composition was comprised of a mixture of nearly equal amounts of fine powder and soft-cake aggregates.

A cappuccino mix was prepared that was identical to the reference mix, with the exception that the spray-dried 50% fat non-foaming coffee creamer of the reference mix was replaced by an equal weight of the delayed-dispersion composition. The mix was reconstituted (by blending the first and second components and adding the hot water) to produce a cappuccino beverage with a noticeably stronger preparation aroma, a noticeably weaker residual ACF flavor, and similar beverage creaminess and whitening with froth (about 12 mm in height). The cappuccino mix completely dissolved in about 30 seconds after addition of water without stirring. The delayed-dispersion creamer composition exhibited somewhat delayed dispersion in water which beneficially increased the beverage preparation aroma release and reduced the residual flavor.

### EXAMPLE 9

Next, a second delayed-dispersion creamer composition was prepared by spreading 10 g of the spray-dried 50% fat non-foaming coffee creamer of the reference mix of Example 8 in an 8-inch (20.3cm) baking pan and heating the creamer to above its softening point by placing the pan in an oven at 120 ºC for 15 minutes. After removing from heat and cooling to room temperature, the delayed-dispersion composition comprised a somewhat browned soft-cake sheet. The sheet was easily comminuted to produce a granular delayed-dispersion creamer composition having a particle size less than about 3 mm.

A cappuccino mix was prepared that was identical to the reference mix of Example 8, with the exception that the spray-dried 50% fat non-foaming coffee creamer of the reference mix was replaced by an equal weight of the granular, delayed-dispersion creamer composition. The mix was reconstituted (by adding hot water) to produce a cappuccino beverage with even stronger preparation aroma, even weaker residual ACF flavor, and similar beverage creaminess and whitening with froth (about 12 mm in height). The cappuccino mix completely dissolved in about 30 seconds after addition of water without stirring. The granular, delayed-dispersion composition creamer exhibited somewhat delayed dispersion in water which beneficially increased the beverage preparation aroma release and reduced the residual flavor.

### EXAMPLE 10

Next, a third delayed-dispersion creamer composition was prepared by mixing a 5 g sample of the same spray-dried 50% fat non-foaming coffee creamer of the reference mix of Example 8 with 10 g crystalline lactitol monohydrate (95 ºC melting point) powder to provide a meltable binding agent for the creamer powder. The creamer-lactitol mixture was spread in an 8-inch (20.3cm) baking pan and heated to above the softening points of the creamer and binding agent by placing the pan in an oven at 120 ºC for 15 minutes. After removing from heat and cooling to room temperature, the creamer-lactitol mixture comprised a somewhat browned hard-cake sheet. The sheet was easily comminuted to produce a granular delayed-dispersion creamer-lactitol composition having a particle size less than about 3 mm.

A cappuccino mix was prepared that was identical to the reference mix of Example 8, with the exception that the spray-dried 50% fat non-foaming coffee creamer of the reference mix was replaced by 7.2 g of the granular delayed-dispersion creamer-lactitol composition to provide the same amounts of creamer and fat used in Examples 8 and 9. The mix was reconstituted (by adding the hot water) to produce a cappuccino beverage with even stronger preparation aroma, even weaker residual ACF flavor, and similar beverage creaminess and whitening with froth (13 mm in height). The majority of creamer-lactitol granules sank to the bottom of the beaker and dispersed slowly after addition of water. Most of the granules were not completely dissolved one minute after the addition of water, and the beverage was subsequently stirred for about 30 seconds to completely dissolve the granules. The granular delayed-dispersion creamer-lactitol composition exhibited greatly delayed dispersion in water which beneficially provided greatly increased beverage preparation aroma release and greatly reduced residual flavor. Despite very slow dispersion of the majority of the creamer-lactitol granules, the cappuccino beverage exhibited very good whitening immediately after addition of water, due, at least in part, to the presence of SMP in the mix, and became somewhat whiter after complete dissolution.

Replacing the untreated creamer of the reference mix of Example 8 with the delayed-dispersion creamers of Examples 8, 9, or 10 also improved the sensorial balance of both aroma and residual flavor in the reconstituted cappuccino beverages relative to the reconstituted reference mix. The creamer aggregates of Examples 8 and 9 were very fragile and could easily be reduced to fine powders by prolonged dry-mixing with other cappuccino mix components. In contrast, the creamer-lactitol granules of Example 10 were beneficially much harder and much more resistant to size reduction by prolonged dry-mixing, beneficially had the appearance of confectionery pieces in the cappuccino mix, and, if desired, could be flavored and/or colored to provide further sensory and/or visual benefit. Creamer and creamer-binder composition and ratio, powder bed depth, heating time, heating temperature, particle size, and particle shape can be controlled to provide desired flavor, appearance, resistance to grinding during mixing and handling, extent of delayed dispersion, and other attributes to optimize utility and quality for specific product applications. Although use of lactitol monohydrate as a creamer powder binding agent is particularly advantageous in cappuccino mixes because it is derived from milk and has relatively low melting temperature, other sugar alcohols, sugars, carbohydrates, lactose-containing milk powders, and the like, or mixture thereof could be similarly employed to beneficially transform rapidly-dissolving conventional spray-dried creamer powders into more useful hardened granules having delayed dispersion in liquid.

### EXAMPLE 11

Additional batches of the granular delayed-dispersion creamer-lactitol composition of Example 10 were prepared and used to formulate a foaming instant cappuccino beverage mix. The composition had apparent particle density of about 1.4 g/cc. Fraction sizes collected between 8-20 mesh sieves (0.85-2.36 mm) were used to formulate a cappuccino mix as follows:

A first component was comprised of:
(1) 4 g sugar;
(2) 2 g spray-dried SC;
(3) 3.1 g low-density spray dried 1% fat (residual milk fat) SMP foaming ingredient (Kerry Foods; Ireland);
(4) 3.0 g fat-free pressurized-gas carbohydrate powder foaming ingredient of Example 2; and
(5) an aroma source (Artificial Coffee Flavor SD 7887-166-1 (55243A; ACOF-1); Kraft Foods; Glenview, IL) comprising 0.08 g 5% fat (triglyceride fractionated coconut oil used as a non-volatile carrier liquid) spray-dried ACF comprised of a compounded flavor mixture, encapsulated in an amorphous particulate carbohydrate carrier to provide a powder containing about 3% flavor by weight, including many fat-soluble or fat-miscible odor-active volatile chemical components that are predominantly liquid or solid in their pure form at 25 ºC and atmospheric pressure with individual boiling points below 300 ºC, 200 ºC, or 150 ºC.

A second component was comprised of:
(1) a fat-containing ingredient comprising 7.2 g granular delayed-dispersion creamer-lactitol composition.

When the mix was reconstituted by blending first and second components adding the hot water, and stirring, the delayed-dispersion creamer-lactitol granules sank to the bottom of the beaker and slowly dispersed over about a two-minute period. A reference mix comprised of the same ingredients, except for the substitution of 4.8 g spray-dried 50% fat non-foaming coffee creamer and 2.4 g crystalline lactitol monohydrate of Example 10 for the 7.2 g granular creamer-lactitol composition, was similarly prepared and dispersed in about 15 seconds when similarly reconstituted.

Open-system dynamic Gas Chromatography Mass Spectrometry (GCMS) beverage headspace analysis was conducted after mix reconstitution for both mixes. This analysis was conducted by collecting fixed volumes of air sampled from the beverage headspace at several different fixed positions above the beverage over a fixed period of time, combining the air samples, trapping the odor-active volatile chemical components of the aroma present in the combined air samples on an adsorbent material, desorbing the aroma components by sweeping the adsorbent material with an inert carrier gas into a gas chromatograph to separate individual aroma components from the mixture, and then quantifying individual aroma components using mass spectrometry analysis to identify each component.

A total of 22 different coffee aroma compounds were simultaneously analyzed using this procedure. The reconstituted cappuccino mix formulated with the granular delayed-dispersion creamer-lactitol composition demonstrated improved aroma release during the first time period (10-20 seconds) sampled and analyzed versus the same time period sampled and analyzed for the reconstituted reference mix. The concentration of each of the 22 individual coffee aroma compounds present in the headspace sampled from above the reconstituted cappuccino mix formulated with the granular delayed-dispersion creamer-lactitol composition during the 10-20 second time period ranged from about 1-5 times the concentration of the same coffee aroma compounds present in the headspace similarly sampled from above the reconstituted reference mix. The total amount of the 22 different coffee aroma compounds present in the headspace sampled from above the reconstituted cappuccino mix formulated with the granular delayed-dispersion creamer-lactitol composition during the 10-20 second time period was approximately 2.5 times greater than the total amount of the same coffee aroma compounds present in the headspace similarly sampled from above the reference mix, corresponding to an approximate 150% increase in coffee aroma concentration.

In addition, members of a trained panel individually reconstituted and sensorially evaluated identical samples of the same cappuccino mixes described above using a blind format and rated the beverage formulated with the granular creamer-lactitol composition significantly higher in preparation aroma impact than the beverage prepared from the reference mix. The panel rated the beverage formulated with the granular delayed-dispersion creamer-lactitol composition as having greater overall aroma impact and greater coffee aroma impact than the beverage prepared from the reference mix. The beverage formulated with the granular delayed-dispersion creamer-lactitol composition also had lower residual ACF flavor than the beverage prepared from the reference mix.

In addition, 64 members of an untrained consumer panel, comprised of 29 males and 35 females, individually reconstituted and sensorially evaluated identical samples of the same cappuccino mixes described above using a blind format with randomized order and rated the beverage formulated with the granular delayed-dispersion creamer-lactitol composition significantly higher in preparation aroma impact than the beverage prepared from the reference mix. The consumer panel rated the beverage formulated with the granular delayed-dispersion creamer-lactitol composition as having greater overall aroma impact and greater coffee aroma impact than the beverage prepared from the reference mix, with a statistical confidence level of 93%. Both reconstituted mixes provided beverages with similar creaminess, whitening, and froth height (about 35 mm).

### EXAMPLE 12

Additional batches of the granular delayed-dispersion creamer-lactitol composition of Example 11 were prepared and the same cappuccino mix and reference mix products of Example 11 were prepared, but without addition of ACF. Members of the same trained panel individually reconstituted and sensorially evaluated both mixes using a blind format and rated the beverage formulated with the granular delayed-dispersion creamer-lactitol composition significantly higher in preparation aroma impact than the beverage prepared from the reference mix. The panel rated the beverage formulated with the granular delayed-dispersion creamer-lactitol composition as having greater overall aroma impact and greater roasted aroma impact than the beverage prepared from the reference mix. This surprisingly demonstrated that use of the granular delayed-dispersion creamer-lactitol composition in the cappuccino mix as a delayed-dispersion creamer in place of the untreated creamer was effective in enhancing the normally relatively weak inherent preparation aroma provided by the soluble coffee powder due to the presence of small amounts of naturally-occurring fat-soluble, volatile flavor ingredients in the soluble coffee powder. Both reconstituted mixes provided beverages with creaminess, whitening, and froth height similar to the beverages of Example 11. In addition, dispersion times of the cappuccino mix and reference mix were similar to those of Example 11.

### EXAMPLE 13

Additional batches of the granular delayed-dispersion creamer-lactitol composition of Example 10 were prepared, the creamer-lactitol granules were sieved to obtain a range of different particle size fractions, and each size fraction was separately used to formulate a cappuccino mix composition that was otherwise identical to Example 10. The reference mix of Example 8 was also prepared. Size fractions collected between 8-20 mesh sieves (0.85-2.36 mm), 20-40 mesh sieves (0.425-0.85 mm), and smaller (less than 0.425 mm) were used to prepare mixes. The larger size fractions had a desirable uniform granular appearance while the smaller size fraction had a less desirable more powder-like appearance. Upon reconstitution of the mixes (by adding the hot water and stirring), only the larger size fractions of the granular delayed-dispersion creamer-lactitol composition dispersed more slowly than the reference mix, which dispersed in about 15 seconds when similarly reconstituted. The 20-40 mesh sized creamer-lactitol fraction dispersed at a rate intermediate between the smaller size fraction and the fraction size of Example 10. When stirring began immediately after water addition, the 20-40 mesh creamer-lactitol size fraction dispersed in about 45 seconds, the size fraction smaller than 40 mesh dispersed in about 15 seconds, and the 8-20 mesh size fraction, closest to that of Example 10, dispersed in about 90 seconds. By comparison, when the same compositions were reconstituted by adding the hot water without stirring, the 8-20 mesh creamer-lactitol size fraction dispersed in about 3 minutes and the 20-40 mesh size fraction dispersed in about 1.5 minutes. The aroma released from the stirred beverages was assessed using an informal sensory evaluation. The beverage prepared with the 8-20 mesh creamer-lactitol size fraction produced the strongest aroma and weakest residual ACF flavor, the beverage prepared with the 20-40 mesh size fraction produced the next-strongest aroma and next-weakest residual ACF flavor, and the reference mix produced the weakest aroma and strongest residual ACF flavor. The beverage prepared with the creamer-lactitol size fraction smaller than 40 mesh produced aroma intensity substantially weaker, and residual ACF flavor substantially stronger, than the larger size fractions and did not produce substantially stronger aroma, or substantially weaker residual ACF flavor, than the reference mix. Each stirred beverage produced about 12 mm of froth and provided comparable beverage creaminess and whitening.

### EXAMPLE 14

The spray-dried 50% fat non-foaming coffee creamer of Example 1 was mixed with Domino® superfine sugar to provide a tableting aid for the creamer powder and compressed to form tablets according to the following procedure. A dry-blend comprised of 1.2 g creamer and 1.2 g sugar was poured into a cylindrical tableting die having a 1.0 square-inch (654.2 square millimetres) cross-sectional area. The mixture was compressed at an Instron crosshead speed of 5mm per minute until a pressure of 1000 psi (6894.8 kPa) was reached. The tablet was removed from the die, comminuted by breaking with a spatula, and sieved to provide approximately 2-4mm delayed-dispersion creamer-sugar granules.
Additional delayed-dispersion creamer-sugar granules were similarly produced to provide a sufficient quantity to formulate a foaming instant cappuccino mix. The resulting creamer-sugar composition had apparent particle density of about 1.3 g/cc after comminuting. The fraction size collected between 5-8 mesh sieves (2.36-4 mm) was used to formulate a cappuccino mix as follows:

A first component was comprised of:
(1) 1.6 g sugar;
(2) 2 g spray-dried SC of Example 1;
(3) 3.1 g spray-dried 1% fat SMP foaming ingredient of Example 1;
(4) 3.0 g fat-free pressurized-gas carbohydrate powder foaming ingredient of Example 2; and
(5) an aroma source comprising 0.08 g 5% fat spray-dried ACF of Example 11.

A second component was comprised of:
(1) a fat-containing ingredient comprising 4.8 g delayed-dispersion creamer-sugar granules.

When the mix was reconstituted (by blending first and second components, adding hot water, and stirring), the delayed-dispersion creamer-sugar granules sank to the bottom of the beaker and slowly dispersed in the beverage over about a 75-second period. A reference mix comprised of the same ingredients, except for the substitution of 2.4 g creamer and 4 g sugar for the 4.8 g delayed-dispersion creamer-sugar granules and 1.6 g sugar was prepared and, when similarly reconstituted, dispersed in about 15 seconds.

Both reconstituted mixes provided beverages with similar creaminess, whitening, and froth height (about 35 mm). Open-system dynamic GCMS beverage headspace analysis was conducted on both products after mix reconstitution using the same procedure described in Example 11. The reconstituted cappuccino mix formulated with the delayed-dispersion creamer-sugar granules demonstrated improved preparation aroma release during the first time period (10-20 seconds) sampled and analyzed versus the same time period sampled and analyzed for the reconstituted reference mix. The total amount of the 22 coffee aroma compounds present in the headspace sampled from above the reconstituted cappuccino mix formulated with the delayed-dispersion creamer-sugar granules during the 10-20 second time period was approximately 40% greater than the total amount of the same coffee aroma compounds present in the headspace similarly sampled from above the reference mix. The beverage formulated with the delayed-dispersion creamer-sugar granules also had lower residual ACF flavor than the beverage prepared from the reference mix. Creamer and creamer-tableting aid composition and ratio, powder bed depth, compaction pressure, compaction temperature, particle size, and particle shape can be controlled to provide desired flavor, appearance, resistance to grinding during mixing and handling, extent of delayed dispersion, and other attributes to optimize utility and quality for specific product applications.

## Claims

1. A method for preparing a composition for preparing a beverage having enhanced aroma release and reduced residual flavor comprising:
providing an aroma source comprising a fat-soluble, volatile flavor ingredient, wherein the aroma source contains less than 2.0g of fat per serving;
providing a fat-containing ingredient configured to have a delayed dispersibility in a liquid,
wherein configuring the fat-containing ingredient to have a delayed dispersibility in a liquid comprises one of:
at least one of coating, aggregating, granulating, encapsulating, compacting, tableting, extruding, denaturing, and hardening the fat-containing ingredient;
configuring the fat-containing ingredient to contain a fat having a melting point above 50 °C; or
at least one of complexing, sequestering, sorbing, chelating, and encapsulating the fat in a particulate material comprising at least one of amylose, cyclodextrin, a molecular sieve, a porous sorbent, a non-porous sorbent, a protein, a gum, a polymer, and mixtures thereof; and
wherein the fat-containing ingredient having a delayed dispersibility in a liquid does not completely disperse, nor completely dissolve, nor completely disintegrate in water at a temperature above ambient room temperature for at least 10 seconds, to inhibit the dissolution of the fat-soluble, volatile flavor ingredient in the fat-containing ingredient when the beverage is prepared and to thereby promote the release of the fat-soluble, volatile flavor ingredient into a headspace above the beverage when the beverage is prepared to provide enhanced aroma release with reduced residual flavor in the beverage due to the fat-soluble, volatile flavor ingredient.

2. The method of claim 1 further comprising providing a foaming ingredient.

## Patentansprüche

1. Verfahren zur Herstellung einer Zusammensetzung zur Herstellung eines Getränkes mit verbesserter Aromafreisetzung und reduziertem Rest-Geschmack umfassend:
Bereitstellen einer Aromaquelle umfassend einen fettlöslichen, flüchtigen Geschmacksinhaltsstoff, wobei die Aromaquelle weniger als 2,0 g Fett pro Portion enthält;
Bereitstellen eines Fett-enthaltenen Inhaltsstoffes der so konfiguriert ist, dass er eine verzögerte Dispergierbarkeit in einer Flüssigkeit aufweist,
wobei das Konfigurieren des Fett-enthaltenen Inhaltsstoffes zum Aufweisen einer verzögerten Dispergierbarkeit in einer Flüssigkeit umfasst eines von:
mindestens eines von beschichten, aggregieren, granulieren, verdichten, tablettieren, extrudieren, denaturieren und verfestigen des Fett-enthaltenen Inhaltsstoffes;
Konfigurieren des Fett-enthaltenen Inhaltsstoffes, um ein Fett zu enthalten, das einen Schmelzpunkt über 50°C aufweist; oder
mindestens eines von komplexieren, absondern, sorbieren, chelatisieren und einkapseln des Fettes in einen Feststoff umfassend mindestens eines von Amylose, Cyclodextrin, ein molekulares Sieb, ein poröses Sorptionsmittel, ein nicht-poröses Sorptionsmittel, ein Protein, einen Klebstoff, ein Polymer, und Mischungen davon; und
wobei der Fett-enthaltene Inhaltsstoff mit einer verzögerten Dispergierbarkeit in einer Flüssigkeit sich weder vollständig verteilt, noch sich vollständig löst, noch vollständig in Wasser bei einer Temperatur über der Umgebungsraumtemperatur für mindestens 10 Sekunden zerfällt, um die Lösung des fettlöslichen, flüchtigen Geschmacksinhaltsstoffes in dem Fett-enthaltenen Inhaltsstoff zu verhindern, wenn das Getränk hergestellt wird und um dadurch die Freisetzung des fettlöslichen, flüchtigen Geschmacksinhaltsstoffes in den Kopfraum über dem Getränk zu fördern, wenn das Getränk hergestellt wird, um verbesserte Aromafreisetzung mit verringertem Rest-Geschmack in dem Getränk aufgrund des fettlöslichen, flüchtigen Geschmacksinhaltsstoffes bereitzustellen.

2. Verfahren gemäß Anspruch 1 weiter umfassend die Bereitstellung eines schäumenden Inhaltsstoffes.

## Revendications

1. Procédé de préparation d'une composition permettant de préparer une boisson présentant une meilleure libération des arômes et une saveur résiduelle réduite, comprenant :
la fourniture d'une source d'arôme comprenant un ingrédient aromatique volatil et liposoluble, dans laquelle la source d'arôme contient moins de 2,0 g de matière grasse par portion ;
la fourniture d'un ingrédient contenant des matières grasses, configuré pour avoir une dispersibilité retardée dans un liquide,
dans lequel la configuration de l'ingrédient contenant des matières grasses pour avoir une dispersibilité retardée dans un liquide comprend l'une des suivantes :
au moins un parmi l'enrobage, l'agrégation, la granulation, l'encapsulation, le compactage, le pastillage, l'extrusion, la dénaturation et le durcissement de l'ingrédient contenant des matières grasses ;
la configuration de l'ingrédient contenant des matières grasses de façon qu'il contienne une matière grasse présentant un point de fusion supérieure à 50 °C ; ou
au moins une parmi la complexation, la séquestration, la sorption, la chélation et l'encapsulation de la matière grasse dans une matière particulaire comprenant au moins une parmi l'amylose, la cyclodextrine, un tamis moléculaire, un sorbant poreux, un sorbant non poreux, une protéine, une gomme, un polymère et leurs mélanges ; et
dans lequel l'ingrédient contenant des matières grasses ayant une dispersibilité retardée dans un liquide ne se disperse pas complètement, ni ne se dissout complètement, ni ne se désintègre complètement dans de l'eau à une température supérieure à la température ambiante pendant au moins 10 secondes, pour inhiber la dissolution de l'ingrédient aromatique volatil et liposoluble dans l'ingrédient contenant des matières grasses quand la boisson est préparée et pour ainsi favoriser la libération de l'ingrédient aromatique volatil et liposoluble dans l'espace vide au-dessus de la boisson quand la boisson est préparée pour permettre une meilleure libération des arômes avec une saveur résiduelle réduite dans la boisson due à l'ingrédient aromatique volatil et liposoluble.

2. Procédé selon la revendication 1, comprenant en outre la fourniture d'un ingrédient moussant.
